# EUROPEAN PATENT APPLICATION

(11) **EP 1 580 467 A1**
(43) Date of publication of application: **28.09.2005**
(21) Application number: 05380036.3
(22) Date of filing: 25.02.2005
(51) Int. Cl.: F16K 5/06

(54) **Ball valve with built-in check valve**

(30) Priority: 23.03.2004 ES 200400706
(71) Applicant: Genebre, S.A., 08908 L'Hospitalet de Llobregat (Barcelona) (ES)
(72) Inventor: Monterde Fabregat, Lluis c/o Genebre S.A., 08908 L'Hospitalet de Llobregat(Barcel.) (ES)
(74) Representative: Aragones Forner, Rafael Angel

(57) **Abstract**

This valve is of the type comprising a tubular body (1) innerly housing a globe or ball being apt to be rotatably actuated in order to thus allow the fluid to pass through said body when the globe is arranged in such a way as to have its diametral passage longitudinally aligned with said body. A valve member (18) is provided in the inside of the passage (10), said valve member through guiding means (11, 12) being provided in said passage being longitudinally shiftable through this latter, said valve member being resiliently biased against an inner, circular seat (20) of the fluid inflow open end of the passage (10). In this way not only the corresponding handle (7) has to be actuated in order to allow the fluid to flow through the body (1), but said fluid also has to be at a given pressure in order to thus be in a position to overcome the resistance being offered by the valve member (18), the performances of a conventional valve and those of a check valve being thus obtained in one only unit.

## Description

### OBJECT OF THE INVENTION

As stated by its title, the present invention relates to a valve.

### FIELD OF THE INVENTION

This valve has been devised for those fluid transport systems needing a conventional ball valve as well as a check valve but because of their reduced space conditions only with difficulty allowing both said valves to be installed in them, the present valve being apt to replace both said valves and being also advantageously apt to be used in those systems happening to enjoy more ample space conditions, since one only valve is of course easier to install and more economical.

### BACKGROUND OF THE INVENTION

The known valves are either ball valves or check valves, there existing no valve having both their performances in one only unit.

The above-mentioned ball valves generally comprise a tubular body being formed by two pieces and innerly housing a globe or ball being apt to be rotatably actuated by means of a handle or an external pneumatic actuator, the fluid being allowed to pass through said body when the globe is arranged in such a way as to have its diametral passage longitudinally aligned with said body.

The check valves also in their turn comprise a tubular body in this case being nevertheless provided in its inside with means being apt to always maintain the fluid inflow open end of said body in a closed state, the valve being caused to open when a given fluid pressure acts against said means.

### SUMMARY OF THE INVENTION

As has already been said, with the valve being the object of the invention the performances of the two aforementioned valves are obtained in one only unit, said valve in principle comprising the same elements as a conventional ball valve and for such a purpose being characterised in that in the inside of its diametral passage said ball is provided with a valve member, this latter through guiding means being provided in said passage being longitudinally shiftable through this latter, said valve member being resiliently biased against an inner, circular seat of the fluid inflow open end of the passage and thus keeping said open end in a closed state.

The valve member and the guiding means being provided for it are respectively made up by a stem ending in a disc-shaped head at the end facing the fluid inflow open end of the passage, and by a tubular bushing being provided around said stem and being of sufficient length so as to thus prevent said stem from being misaligned, said tubular bushing being through radial arms removably secured to the fluid outflow open end of the passage, said passage forming around the valve member an amply dimensioned, hollowed out space inside the ball, all this allowing the fluid flow to take place under good and enhanced conditions and also avoiding the turbulence and noise phenomena otherwise possibly being caused by it.

The aforementioned tubular bushing is secured to the fluid outflow open end of the passage by means of having the ends of its radial arms gripped between the step being formed by the two cylindrical regions of different diameter of said open end and a safety ring being fitted into a circular slot of the wider region, said arms slantedly extending from the bushing and thereby diverging towards said open end.

In order to abuttingly seal against the seat of the fluid inflow open end of the passage the disc-shaped head of the valve member in its turn comprises a resilient sealing ring being bondedly attached through vulcanisation to the free face of said head so as to thus prevent said seal from coming off said free face of said head and the small sand particles or the like from intruding between them, at its free face the head also having a central protuberance being apt to laterally divert the fluid flow and thus helping the fluid to better circulate through the ball passage.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 is a sectional side elevation showing a conventional valve.
Fig. 2 is another sectional side elevation showing a valve as per the invention with the ball passage in an open state.
Fig. 3 is a side elevational view in half section showing the ball of the valve of the invention with the passage in a closed state.
Fig. 4 is another side elevational view in half section showing said ball with the passage in an open state.
Fig. 5 is a sectional front view showing the same ball having been sectioned as per section line V-V in Fig. 3.

### DESCRIPTION OF AN EXEMPLARY EMBODIMENT

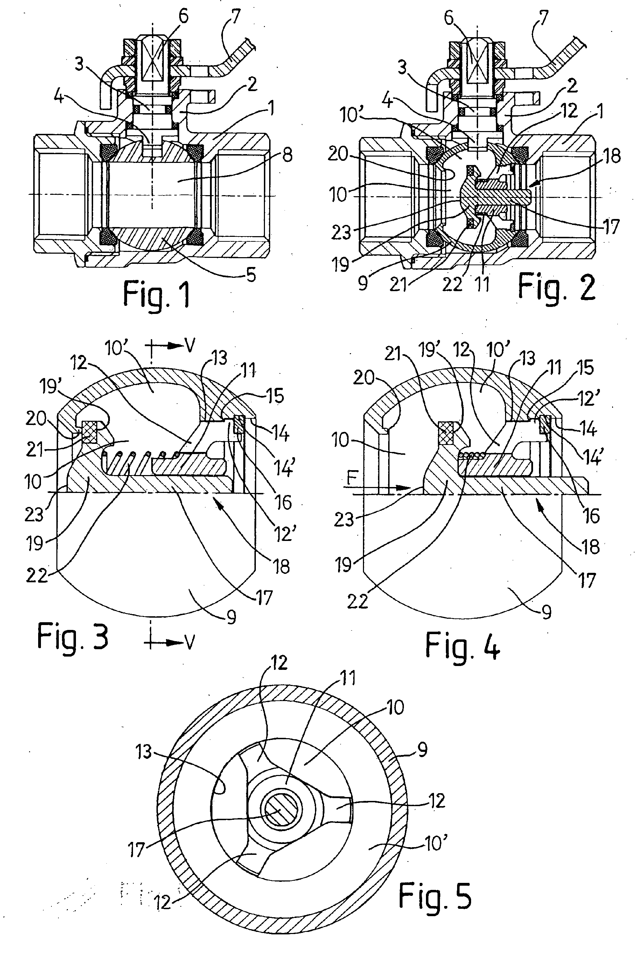

According to the drawings a conventional valve (see Fig. 1) essentially comprises a tubular body (1) being formed by two pieces being threadingly fitted to each other, said body having a radial neck (2) through which a control spindle (3) projects and at one end (4) is fitted to the globe or ball (5) being housed inside the body (1), said control spindle at its opposite end (6) being fitted to an actuating handle (7) being apt to be used to rotate the ball (5) to thereby arrange it in such a way that an amply dimensioned diametral passage (8) being provided in it is or is not aligned with the body (1) and thereby allows or does not allow the fluid to pass through it.

The valve of the invention (Fig. 2) does as well comprise a two-piece tubular body (1) with its radial neck (2), and the control spindle extending through said neck and being at one end (4) fitted to a ball (9) being housed inside the body (1), said control spindle being at the opposite end (6) fitted to a handle (7) being apt to rotate said ball, this latter substantially differing from the conventional one (5).

In the inside of its diametral passage (10) this ball (9) comprises a tubular bushing (11) being provided with radial arms (12) whose number can be of three or more depending on the valve size, said radial arms slantedly extending from the bushing (11) and thereby spreading out towards the fluid outflow open end of the passage (10), said open end having two cylindrical regions namely being a narrower one (13) being located towards the inside of the passage (10), and another one (14) being wider and located towards the outside, the ends (12') of the arms (12) being gripped between the step (15) being formed by said regions and a safety ring (16) being fitted into a circular slot (14') of the wider region (14).

The bushing (11) is fitted around the stem (17) of a valve member (18) and thereby forms the guiding means being provided for guiding said stem, this latter being longitudinally shiftable through the passage (10) and ending in a disc-shaped head (19) being provided at the end of said stem facing the fluid inflow open end of the passage (10), said open end innerly forming a circular seat (20) against which the head (19) is apt to abuttingly seal through a peripheral sealing ring (21) being provided on the free face of said head, said sealing ring being bondedly attached through vulcanisation to a corresponding recess (19') of said free face of said head.

A helical spring (22) is fitted around the stem (17) of the valve member (18) and around the bushing (11) between the head (19) of the former and the arms (12) of the latter, said spring always maintaining the fluid inflow open end of the passage (10) in a closed state (Fig. 3), said closed state being switched to an open state when an opportune fluid pressure acting against the head (19) of the valve member (18) (arrow F in Fig. 4) finally overcomes the resistance being offered by this latter and causes it to be shifted in an opening direction.

At its free face the head (19) of the valve member (18) also has a convex, central protuberance (23) being apt to laterally divert the inflowing fluid, and around said valve member the passage (10) forms a barrel-shaped, amply dimensioned, hollowed out space (10') allowing the fluid flow through the inside of the ball to take place under enhanced conditions.

## Claims

1. A valve comprising a tubular body (1) innerly housing a globe or ball being apt to be rotatably actuated by means of a handle (7) or an external pneumatic actuator in order to thus allow the fluid to pass through said body when the globe is arranged in such a way as to have its amply dimensioned, diametral passage longitudinally aligned with said body, **characterised in that** in the inside of its diametral passage (10) said ball (9) is provided with a valve member (18), this latter through guiding means being provided in said passage being longitudinally shiftable through this latter, said valve member being resiliently biased (22) against an inner, circular seat (20) of the fluid inflow open end of the passage (10) and thus keeping said open end in a closed state.

2. A valve as per claim 1, **characterised in that** the valve member (18) and the guiding means being provided for it are respectively made up by a stem (17) ending in a disc-shaped head (19) at the end facing the fluid inflow open end of the passage (10), and by a tubular bushing (11) being provided around said stem, said tubular bushing being through radial arms (12) removably secured to the fluid outflow open end of the passage (10).

3. A valve as per claims 1 and 2, **characterised in that** the passage (10) forms around the valve member (17) an amply dimensioned, hollowed out space (10') inside the ball (9).

4. A valve as per claim 2, **characterised in that** the bushing (11) is secured to the fluid outflow open end of the passage (10) by means of having the ends (12') of its arms (12) gripped between the step (15) being formed by the two cylindrical regions (13, 14) of different diameter of said open end and a safety ring (16) being fitted into a circular slot (14') of the wider region (14) .

5. A valve as per claim 2, **characterised in that** in order to abuttingly seal against the seat (20) of the fluid inflow open end of the passage (10) the head (19) of the valve member (18) comprises a resilient sealing ring (21) being bondedly attached through vulcanisation to the free face of said head.

6. A valve as per claim 2, **characterised in that** at its free face the head (19) of the valve member (18) has a central protuberance (23) being apt to allow the fluid flow through the passage (10) to take place under enhanced conditions.

7. A valve as per claims 2 and 4, **characterised in that** the arms (12) of the bushing (11) slantedly extend from this latter thereby diverging towards the fluid outflow open end of the passage (10).
